# FASCICULE DE BREVET EUROPEEN

(11) **EP 1 633 028 B1**
(45) Date de publication et mention de la délivrance du brevet: **02.05.2007**
(21) Numéro de dépôt: 05300707.6
(22) Date de dépôt: 01.09.2005
(51) Int. Cl.: H02G 15/184, H02G 15/188

(54) **Agencement de liaison d'un câble d'énergie à un élément d'équipement**
Verbindungsanordnung eines Energiekabels an ein Element eines Gerätes
Connection assembly of a power cable to an equipment element

(30) Priorité: 03.09.2004 FR 0451966
(43) Date de publication de la demande: 08.03.2006
(73) Titulaire: Nexans, Societe Anonyme, 75008 Paris (FR)
(72) Inventeur: Mirebeau, Pierre, 91140, Villebon Sur Yvette (FR); Moreau, Laurent, 62219, Longuenesse (FR); Duvivier Martine, 62850, Licques (FR)
(74) Mandataire: Lenne, Laurence

(56) Documents cités:
- EP-A- 0 920 102
- FR-A- 2 685 141
- FR-A- 2 697 665
- US-A- 4 698 458

## Description

L'invention concerne un agencement de liaison d'un câble d'énergie haute ou très haute tension à un élément d'équipement.

Un câble d'énergie comporte, de l'intérieur vers l'extérieur, autour d'un conducteur, une couche isolante, une couche de semi-conducteur, un écran métallique et une gaine externe isolante.

Pour sa liaison à un équipement, par exemple à un élément de jonction de câbles ou d'extrémité de câble, la gaine externe est retirée sur une certaine longueur, un joint de soudure est réalisé entre l'écran métallique du câble et un écran métallique de l'élément d'équipement et un élément de liaison est disposé entre le câble et l'élément d'équipement, venant par l'une de ses extrémités en contact avec la gaine externe du câble et par son autre extrémité en contact avec la surface externe de l'élément d'équipement.

Cet élément de liaison comporte un tronçon de gaine thermorétractable ainsi appliquée longitudinalement entre la gaine externe du câble et la surface externe de l'élément d'équipement. Radialement entre ce tronçon de gaine thermorétractable et les éléments que sont l'écran métallique du câble, la surface externe de l'élément d'équipement et la soudure, est classiquement disposée une couche de mastic.

EP 0 920 102 A est considéré comme représentant l'état de la technique le plus proche.

Un tel agencement de liaison pose le problème technique suivant.

La gaine isolante externe du câble est traditionnellement extrudée. Elle présente de par ce mode de fabrication une capacité au retrait plus importante qu'une gaine moulée. De plus, elle peut être, pour des câbles à tension haute ou très haute tension transportant beaucoup d'énergie, et donc lourds, réalisée en matière élastomère haute densité, par exemple en polyéthylène haute densité, qui présente de par sa composition une capacité de retrait plus importante qu'une matière élastomère basse ou moyenne densité.

Suite à ce retrait de la gaine externe du câble qui peut atteindre des efforts de plusieurs tonnes, il peut arriver que la gaine externe se détache de l'agencement de liaison et que l'écran métallique du câble soit mis à nu, ce qui est préjudiciable au bon fonctionnement électrique suite à la perte de l'isolation. La tenue en tension et aux chocs de foudre de l'écran métallique est ainsi diminuée.

Ce retrait de la gaine externe du câble peut également entraîner la détérioration des agencements de retenue du câble de type colliers où les couches intermédiaires en néoprène destinées à encaisser les dilatations radiales peuvent sortir du collier, suite au coefficient de frottement plus important entre le néoprène et le polyéthylène qu'entre le néoprène et le métal du collier.

L'invention résout ce problème de retrait en proposant un agencement de liaison d'un câble d'énergie haute ou très haute tension à un élément d'équipement qui assure la retenue de la gaine isolante externe du câble à l'encontre de l'effort de retrait inhérent à sa constitution.

Pour ce faire, l'invention propose un agencement de liaison d'un câble d'énergie haute ou très haute tension comprenant une gaine isolante externe à un élément d'équipement comprenant une surface externe, au moyen d'une couche isolante, caractérisé en ce que ladite couche est constituée d'une matière composite résistante en traction dans le sens longitudinal du câble et solidarisée à ladite gaine externe et à ladite surface externe.

Avantageusement, un tronçon de gaine de matière thermorétractable est disposé sur ladite couche isolante mais cette couche isolante peut également assurer à elle seule la liaison et être utilisée comme composant essentiel de l'agencement de liaison.

Selon un premier mode de réalisation préféré de l'invention, ladite matière composite est constituée de fibres disposées sensiblement dans le sens longitudinal du câble noyées dans une résine.

Selon second mode de réalisation préféré de l'invention, ladite matière composite est constituée d'une pluralité de couches de fibres croisées les unes par rapport aux autres selon le sens longitudinal du câble et noyées dans une résine

De préférence, ladite matière composite est constituée d'un tissu de fibres de verre et d'une résine.

Avantageusement, ladite matière composite est constituée d'un ruban de tissu de fibres de verre enroulé autour du câble et de l'élément d'équipement noyé dans une résine époxy.

De préférence, la solidarisation de ladite couche à la gaine externe du câble est effectuée par fusion superficielle de ladite gaine et application de ladite couche.

La solidarisation de ladite couche à la gaine externe du câble est effectuée, avantageusement, par fusion superficielle de ladite gaine, application dudit ruban de tissu sur cette dernière et application de ladite résine.

Dans le cas où l'élément d'équipement comprend une surface externe en matière isolante, par exemple dans le cas d'un élément de jonction de câble à revêtement isolant en matière plastique, la solidarisation de ladite couche à ladite surface externe de l'élément d'équipement peut être effectuée par fusion superficielle de ladite surface et application de ladite couche.

Dans le cas où l'élément d'équipement comprend une surface externe en métal, par exemple dans le cas d'une extrémité de câble à culot métallique, la solidarisation de ladite couche à ladite surface externe de l'élément d'équipement peut être effectuée par soudage d'un élément métallique à protubérances d'ancrage et application de ladite couche.

L'invention est décrite ci-après plus en détail à l'aide de figures ne représentant qu'un mode de réalisation préféré de l'invention.

La figure 1 est une vue en coupe longitudinale d'un agencement de liaison d'un câble d'énergie haute ou très haute tension à un élément de jonction de câble.

La figure 2 est une vue en coupe longitudinale d'un agencement de liaison d'un câble d'énergie haute ou très haute tension à un élément d'extrémité de câble.

Un câble d'énergie 1, haute ou très haute tension, comporte, de l'intérieur vers l'extérieur, autour d'un conducteur 1A, une couche isolante 1B, une couche de semi-conducteur 1C, un écran métallique 1D et une gaine externe isolante 1E.

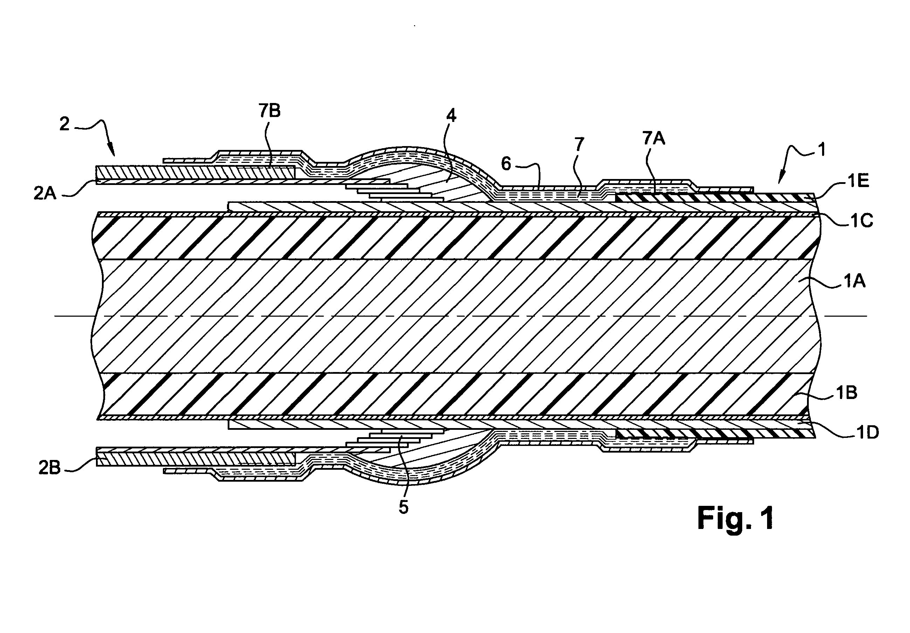

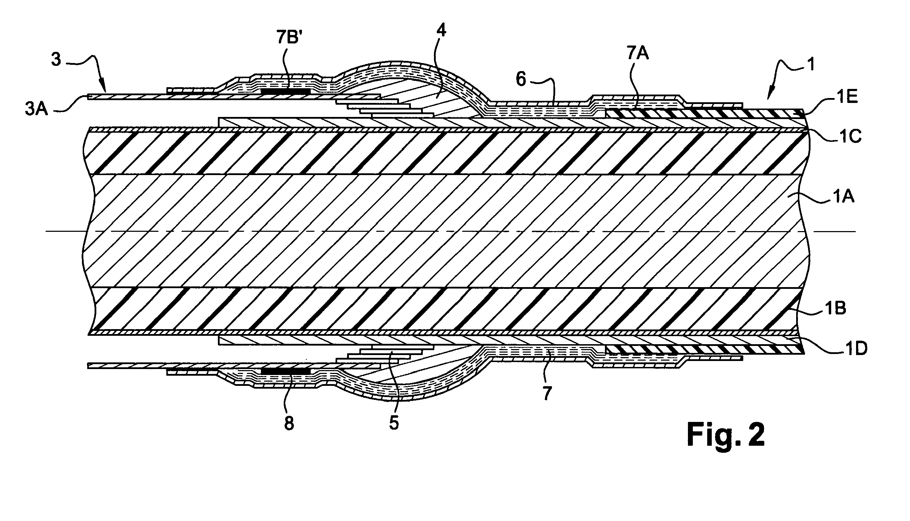

Pour sa liaison avec un élément d'équipement, par exemple à un élément de jonction de câbles 2 comme représenté sur la figure 1 ou d'extrémité de câble 3 comme représenté sur la figure 2, la gaine externe 1E est retirée sur une certaine longueur, un joint de soudure 4 est réalisé à l'aide de plaquettes intercalaires 5 entre l'écran métallique 1D du câble et un écran métallique 2A, 3A de l'élément d'équipement 2, 3 et un élément de liaison est disposé entre le câble 1 et l'élément d'équipement 2, 3, venant par l'une de ses extrémités en contact avec la gaine externe 1E du câble et par son autre extrémité en contact avec la surface externe de l'élément d'équipement 2, 3.

Cet élément de liaison comporte un tronçon de gaine thermorétractable 6 ainsi appliquée longitudinalement entre la gaine externe 1E du câble et la surface externe de l'élément d'équipement 2, 3, et radialement entre ce tronçon de gaine 6 et la gaine externe 1E du câble, la surface externe de l'élément d'équipement 2, 3, et la soudure 4 est classiquement disposée une couche isolante 7.

Selon l'invention, cette couche 7 est constituée d'une matière composite résistante en traction dans le sens longitudinal du câble et solidarisée à la gaine externe 1E du câble et à la surface externe de l'équipement 2, 3.

La matière composite de la couche isolante 7 est constituée de fibres disposées sensiblement dans le sens longitudinal du câble 1 noyées dans une résine, et, de préférence, cette matière composite est constituée d'un tissu de fibres de verre et d'une résine. Selon un mode de réalisation, cette matière composite est constituée d'un ruban de tissu de fibres de verre enroulé autour du câble 1 et de l'élément d'équipement 2, 3, noyé dans une résine époxy.

La solidarisation 7A de cette couche 7 à la gaine externe 1E du câble est effectuée par fusion superficielle de la gaine externe 1E du câble et application de la couche 7.

Selon un exemple de mode de réalisation, la gaine externe 1E du câble est superficiellement fondue au chalumeau, le ruban de tissu de verre est enroulé sur la matière fondue de la gaine 1E et sensiblement simultanément la résine époxy est appliquée au pinceau sur le ruban.

Dans le cas où l'élément d'équipement comprend une couche externe 2B en matière isolante, par exemple dans le cas d'un élément de jonction de câble 2 comme représenté sur la figure 1, la solidarisation 7B de la couche composite 7 à cette couche externe 2B de l'élément d'équipement est effectuée, de la même façon, par fusion superficielle de la couche externe 2B et application de la couche composite 7.

Dans le cas où l'élément d'équipement comprend une gaine externe en métal 3A, par exemple dans le cas du culot d'une extrémité de câble 3 comme représenté sur la figure 2, la solidarisation 7B' de la couche composite 7 à la gaine externe 3A de l'élément d'équipement est effectuée par soudage d'un élément métallique 8 à protubérances d'ancrage et application de la couche composite 7.

Selon un exemple de mode de réalisation, l'élément métallique 8 est soudé sur la gaine externe 3A du culot, le ruban de tissu de verre est enroulé sur la gaine externe métallique 3A et sensiblement simultanément la résine époxy est appliquée au pinceau sur le ruban, réalisant une solidarisation par ancrage des protubérances au sein du ruban et de la résine.

Un agencement de liaison d'un câble d'énergie haute ou très haute tension à un élément d'équipement conforme à l'invention permet de résister aux efforts de retrait de la gaine externe du câble qui peuvent atteindre plusieurs tonnes, et qui sont amplifiés par le poids propre du conducteur particulièrement important à ces tensions.

## Revendications

1. Agencement de liaison d'un câble d'énergie (1) haute ou très haute tension comprenant une gaine isolante externe (1E) à un élément d'équipement (2, 3) comprenant une surface externe, au moyen d'une couche isolante (7), **caractérisé en ce que** ladite couche (7) est constituée d'une matière composite résistante en traction dans le sens longitudinal du câble (1) et solidarisée à ladite gaine externe (1 E) et à ladite surface externe.

2. Agencement selon la revendication 1, **caractérisé en ce que** ladite matière composite est constituée de fibres disposées sensiblement dans le sens longitudinal du câble (1) noyées dans une résine.

3. Agencement selon la revendication 1, **caractérisé en ce que** ladite matière composite est constituée d'une pluralité de couches de fibres croisées les unes par rapport aux autres selon le sens longitudinal du câble (1) et noyées dans une résine.

4. Agencement selon la revendication 2 ou 3, **caractérisé en ce que** ladite matière composite est constituée d'un tissu de fibres de verre et d'une résine.

5. Agencement selon la revendication 4, **caractérisé en ce que** ladite matière composite est constituée d'un ruban de tissu de fibres de verre enroulé autour du câble (1) et de l'élément d'équipement (2, 3) noyé dans une résine époxy.

6. Agencement selon l'une des revendications précédentes, **caractérisé en ce que** la solidarisation (7A) de ladite couche (7) à la gaine externe (1E) du câble est effectuée par fusion superficielle de ladite gaine (1 E) et application de ladite couche (7).

7. Agencement selon l'une des revendications 5 et 6, **caractérisé en ce que** la solidarisation (7A) de ladite couche (7) à la gaine externe (1 E) du câble est effectuée par fusion superficielle de ladite gaine (1 E), application dudit ruban de tissu sur cette dernière et application de ladite résine.

8. Agencement selon l'une des revendications précédentes, **caractérisé en ce qu**'un tronçon de gaine de matière thermorétractable (6) est disposé sur ladite couche isolante (7).

9. Agencement de liaison d'un câble d'énergie haute ou très haute tension à un élément d'équipement (2) comprenant une surface externe en matière isolante (2B), selon l'une des revendications précédentes, **caractérisé en ce que** la solidarisation (7B) de ladite couche (7) à ladite surface externe de l'élément d'équipement (2) est effectuée par fusion superficielle de ladite surface (2B) et application de ladite couche (7).

10. Agencement de liaison d'un câble d'énergie haute ou très haute tension à un élément d'équipement (3) comprenant une surface externe en métal (3A), selon l'une des revendications 1 à 8, **caractérisé en ce que** la solidarisation (7B') de ladite couche (7) à ladite surface externe de l'élément d'équipement (3) est effectuée par soudage d'un élément métallique à protubérances d'ancrage (8) et application de ladite couche (7).

## Claims

1. An arrangement for connecting a high or very high voltage power cable (1) comprising an outer insulating sheath (1E), to a piece of equipment (2,3) comprising an outer surface, by means of an insulating layer (7), **characterized in that** said layer (7) consists of a composite material resistant to traction in the longitudinal direction of the cable (1) and permanently attached to said outer sheath (1E) and to said outer surface.

2. The arrangement according to claim 1, **characterized in that** said composite material consists of fibers substantially positioned in the longitudinal direction of the cable (1), embedded in resin.

3. The arrangement according to claim 1, **characterized in that** said composite material consists of a plurality of layers of fibers crossed relatively to each other along the longitudinal direction of the cable (1) and embedded in resin.

4. The arrangement according to claim 2 or 3, **characterized in that** said composite material consists of a glass fiber fabric and a resin.

5. The arrangement according to claim 4, **characterized in that** the said composite material consists of a strip of glass fiber fabric, wound around the cable (1) and the piece of equipment (2,3) embedded in epoxy resin.

6. The arrangement according to any of the preceding claims, **characterized in that** permanent attachment (7A) of said layer (7) to the outer sheath (1E) of the cable is carried out by surface melting said sheath (1E) and applying said layer (7).

7. The arrangement according to any of the claims 5 and 6, **characterized in that** permanent attachment (7A) of said layer (7) to the outer sheath (1E) of the cable is carried out by surface melting said sheath (1E), applying said fabric strip on the latter and applying said resin.

8. The arrangement according to any of the preceding claims, **characterized in that** a sheath section in heat-shrinkable material (6) is positioned on said insulating layer (7).

9. An arrangement for connecting a high or very high voltage power cable to a piece of equipment (2) comprising an outer surface in insulating material (2B) according to any of the preceding claims, **characterized in that** permanent attachment (7B) of said layer (7) to said outer surface of the piece of equipment (2) is carried out by surface melting said surface (2B) and applying said layer (7).

10. An arrangement for connecting a high or very high voltage power cable to a piece of equipment (3) comprising an outer surface in metal (3A), according to any of claims 1 to 8, **characterized in that** permanent attachment (7B') of said layer (7) to said outer surface of the piece of equipment (3) is carried out by welding a metal component with anchoring protrusions (8) and applying said layer (7).

## Patentansprüche

1. Anordnung zur Verbindung eines Hoch- oder Höchstspannungsstromkabels (1), eine äußere Isolierhülle (1E) umfassen, mit einem Ausstattungselement (2, 3), eine Außenfläche umfassend, mittels einer Isolierschicht (7), **dadurch gekennzeichnet, dass** die besagte Schicht (7) von einem in Längsrichtung des Kabels (1) zugfesten Kompositmaterial gebildet wird und mit der besagten äußeren Hülle (1E) und der besagten Außenfläche verbunden ist.

2. Anordnung nach Anspruch 1, **dadurch gekennzeichnet, dass** das besagte Kompositmaterial von Fasern gebildet wird, die etwa in Längsrichtung des Kabels (1) in ein Harz eingebettet angeordnet sind.

3. Anordnung nach Anspruch 1, **dadurch gekennzeichnet, dass** das besagte Kompositmaterial von einer Vielzahl von Faserschichten gebildet wird, die in Längsrichtung des Kabels (1) zueinander gekreuzt und in ein Harz eingebettet sind.

4. Anordnung nach Anspruch 2 oder 3, **dadurch gekennzeichnet, dass** das besagte Kompositmaterial von einem Glasfasergewebe und einem Harz gebildet wird.

5. Anordnung nach Anspruch 4, **dadurch gekennzeichnet, dass** das besagte Kompositmaterial von einem Glasfasergewebeband, das um das Kabel (1) gerollt ist, und dem in ein Expoxydharz eingebetteten Ausstattungselement (2, 3) gebildet wird.

6. Anordnung nach einem der vorangehenden Ansprüche, **dadurch gekennzeichnet, dass** die Verbindung (7A) der besagten Schicht (7) mit der äußeren Hülle (1E) des Kabels durch oberflächliche Fusion der besagten Hülle (1E) und Anbringen der besagten Schicht (7) durchgeführt wird.

7. Anordnung nach einem der Ansprüche 5 und 6, **dadurch gekennzeichnet, dass** die Verbindung (7A) der besagten Schicht (7) mit der äußeren Hülle (1E) des Kabels durch oberflächliche Fusion der besagten Hülle (1E), Anbringen des besagten Gewebebands auf dieser und Anbringen des besagten Harzes durchgeführt wird.

8. Anordnung nach einem der vorangehenden Ansprüche, **dadurch gekennzeichnet, dass** ein Abschnitt der Hülle aus thermisch aufschrumpfbarem Material (6) auf der besagten Isolierschicht (7) angeordnet ist.

9. Anordnung zur Verbindung eines Hoch- oder Höchstspannungsstromkabels mit einem Ausstattungselement (2), eine äußere Fläche aus Isoliermaterial (2B) umfassend, nach einem der vorangehenden Ansprüche, **dadurch gekennzeichnet, dass** die Verbindung (7B) der besagten Schicht (7) mit der besagten äußeren Fläche des Ausstattungselements (2) durch oberflächliche Fusion der besagten Fläche (2B) und Anbringen der besagten Schicht (7) durchgeführt wird.

10. Anordnung zur Verbindung eines Hoch- oder Höchstspannungsstromkabels mit einem Ausstattungselement (3), eine äußere Fläche aus Metall (3A) umfassend, nach einem der Ansprüche 1 bis 8, **dadurch gekennzeichnet, dass** die Verbindung (7B') der besagten Schicht (7) mit der besagten äußeren Fläche des Ausstattungselements (3) durch Schweißen eines Metallelements mit Ankerprotuberanzen (8) und Anbringen der besagten Schicht (7) durchgeführt wird.
